# EUROPEAN PATENT APPLICATION

(11) **EP 4 586 684 A1**
(43) Date of publication of application: **16.07.2025**
(21) Application number: 23870341.7
(22) Date of filing: 13.09.2023
(51) Int. Cl.: H04W 28/16

(54) **COMMUNICATION METHOD AND RELATED APPARATUS**

(30) Priority: 27.09.2022 CN 202211180894
(71) Applicant: Huawei Technologies Co., Ltd., Shenzhen, Guangdong 518129 (CN)
(72) Inventor: HA, Yinaer, Shenzhen, Guangdong 518129 (CN); GENG, Tingting, Shenzhen, Guangdong 518129 (CN); ZENG, Yu, Shenzhen, Guangdong 518129 (CN)
(74) Representative: Maiwald GmbH
(86) International application number: PCT/CN2023/118629
(87) International publication number: WO 2024/067104

(57) **Abstract**

This application provides a communication method and a related apparatus. The method includes: A terminal device receives configuration information of an artificial intelligence (artificial intelligence, AI) function from a network device, and determines, based on the configuration information, whether to enable the AI function. According to the technical solutions provided in this application, network performance can be improved.

## Description

This application claims priority to Chinese Patent Application No. 202211180894.8, filed with the China National Intellectual Property Administration on September 27, 2022 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

In recent years, integration of artificial intelligence and a wireless communication system has become a development trend. Based on wireless network big data, an artificial intelligence (artificial intelligence, AI) algorithm is expected to be used to break through performance bottlenecks caused by conventional modular system modeling and model approximation in typical fields such as channel estimation, pilot detection, signal equalization, and user scheduling. In addition, in terms of network deployment and optimization, the AI algorithm can improve network performance in aspects of channel state information (channel state information, CSI) feedback enhancement, beam management, positioning accuracy enhancement, energy saving, mobility optimization, load balancing, and the like.

An AI model may be usually deployed on a base station side or a terminal side. How to improve network performance when the AI model is enabled is an urgent problem to be resolved.

### SUMMARY

Embodiments of this application provide a communication method and a related apparatus, to improve network performance.

According to a first aspect, this application provides a communication method. The method may be applied to a terminal device, or may be applied to an apparatus (for example, a chip, a chip system, or a circuit) in the terminal device or an apparatus that can be used together with the terminal device. The following uses an example in which the method is applied to the terminal device for description. The method may include: The terminal device receives configuration information of an AI function from a network device, and determines, based on the configuration information, whether to enable the AI function.

In the solution provided in this application, the network device may manage whether to enable the AI function on the terminal device side, for example, determine, based on the configuration information from the network device, whether to enable the AI function. This can improve management and control of a network side on network performance, and reduce impact of enabling the AI function on the terminal device side on the network performance.

In a possible implementation, the AI function includes at least one type of AI function, and different types of AI functions correspond to different degrees of collaboration between the network device and the terminal device. For example, the AI functions may include a level 0 AI collaboration function, a level 1 AI collaboration function, and a level 2 AI collaboration function based on sequential enhancement of the degree of collaboration between the network device and the terminal device.

In a possible implementation, the configuration information includes first indication information, and the first indication information indicates whether the terminal device enables the AI function. The determining, based on the configuration information, whether to enable the AI function includes: determining, based on the first indication information, whether to enable the AI function.

In a possible implementation, the configuration information includes a first condition threshold. The determining, based on the configuration information, whether to enable the AI function includes: when an AI inference result of the terminal device meets the first condition threshold, determining to enable the AI function.

In the solution provided in this application, the terminal device may determine, based on the first condition threshold, whether to enable the AI function. For example, when the AI inference result of the terminal device meets the first condition threshold, the terminal device enables the AI function. The terminal device determines, based on the AI inference result, whether to enable the AI function. This better meets a communication status of the terminal device, and a determining result is more accurate.

In a possible implementation, the first condition threshold includes either an AI inference result confidence threshold or a deviation threshold between the AI inference result and actual measurement information.

In a possible implementation, the configuration information includes area information, and the area information indicates an area in which the terminal device is allowed to enable the AI function. The determining, based on the configuration information, whether to enable the AI function includes: enabling the AI function in the area indicated by the area information.

In the solution provided in this application, the terminal device may determine, based on the area information, whether to enable the AI function. For example, the terminal device enables the AI function in the area indicated by the area information, so that the AI function can be enabled more accurately, and computing resources of the terminal can be saved.

In a possible implementation, the configuration information further includes area information, and the area information indicates an area in which the terminal device is allowed to enable the AI function. The determining, based on the configuration information, whether to enable the AI function includes: when the first indication information indicates the terminal device to enable the AI function, determining to enable the AI function in the area indicated by the area information.

In a possible implementation, when it is determined, based on the configuration information, to enable the AI function, the communication method further includes: enabling an AI model for implementing the AI function; receiving a measurement configuration from the network device; obtaining the AI inference result based on the measurement configuration and the AI model; and sending a measurement report to the network device, where the measurement report includes the AI inference result.

In the solution provided in this application, when determining, based on the configuration information, to enable the AI function, the terminal device enables the AI model, where the AI model may implement the AI function, obtains the AI inference result based on the measurement configuration from the network device and the AI model, and sends the measurement report including the AI inference result to the network device. When the network performance deteriorates, the network device may determine, based on the measurement report, whether network performance deterioration is caused by an improper measurement configuration on the network side or caused by an inaccurate AI inference result on the terminal device side. Therefore, the network device may determine a cause of the network performance deterioration, and correspondingly use a policy to resolve a network performance deterioration problem, for example, adjust and resend the measurement configuration to the terminal device, or send, to the terminal device, indication information indicating the terminal device to disable the AI function, to improve the management and control of the network side on the network performance, and reduce the impact of enabling the AI function on the terminal device side on the network performance.

In a possible implementation, the measurement report further includes at least one of second indication information, third indication information, and fourth indication information. The second indication information indicates that the AI inference result is a result obtained through inference based on the AI model, the third indication information indicates whether the AI inference result is consistent with the actual measurement information, and the fourth indication information indicates deployment node information and collaboration level information of the AI model.

In the solution provided in this application, the measurement report may not only include the AI inference result, but also include more of the foregoing information (for example, the second indication information, the third indication information, and the fourth indication information), so that the network device determines the cause of the network performance deterioration based on more information. This can improve accuracy of determining, by the network device, the cause of the network performance deterioration.

In a possible implementation, the measurement report further includes one or more of indication information for suggesting whether to disable the AI function and key performance indicator (key performance indicator, KPI) feedback information.

In the solution provided in this application, the measurement report may not only include the AI inference result, but also include more of the foregoing information (for example, the indication information for suggesting whether to disable the AI function and the KPI feedback information), so that the network device determines the cause of the network performance deterioration based on more information, and may further determine, based on a suggestion from the terminal device, whether to indicate the terminal device to disable the AI function. This can not only improve the accuracy of determining, by the network device, the cause of the network performance deterioration, but also improve accuracy of the management and control of the network side on the network performance.

In a possible implementation, the communication method further includes: receiving fifth indication information from the network device, where the fifth indication information indicates the terminal device to disable the AI function; and disabling the AI function based on the fifth indication information.

In the solution provided in this application, after receiving the measurement report from the terminal device, the network device may determine, based on the measurement report, whether the network performance deterioration is caused by the improper measurement configuration on the network side or caused by the inaccurate AI inference result on the terminal device side. In a possible implementation, if the network performance deterioration is caused by the inaccurate AI inference result on the terminal device side, the network device may send, to the terminal device, the fifth indication information indicating the terminal device to disable the AI function. After receiving the fifth indication information from the network device, the terminal device determines, based on the fifth indication information, to disable the AI function. The terminal device disables the AI function, obtains the measurement report by using a conventional measurement method, and then reports the measurement report to the network device for adjusting a mobility parameter, so that the network performance deterioration can be resolved, and the network performance can be improved.

According to a second aspect, this application provides a communication method. The method may be applied to a network device, or may be applied to an apparatus (for example, a chip, a chip system, or a circuit) in the network device or an apparatus that can be used together with the network device. The following uses an example in which the method is applied to the network device for description. The method may include: The network device obtains AI capability information of a terminal device, determines that the terminal device supports an AI function, and sends configuration information of the AI function to the terminal device, where the configuration information indicates whether the terminal device enables the AI function.

In the solution provided in this application, the network device may manage whether to enable the AI function on the terminal device side, for example, determine, based on the configuration information from the network device, whether to enable the AI function. This can improve management and control of a network side on network performance, and reduce impact of enabling the AI function on the terminal device side on the network performance.

It should be understood that an execution body of the second aspect may be the network device, and specific content of the second aspect corresponds to content of the first aspect. For corresponding features of the second aspect and beneficial effects achieved by the second aspect, refer to descriptions of the first aspect. To avoid repetition, detailed descriptions are properly omitted herein.

In a possible implementation, the AI function includes at least one type of AI function, and different types of AI functions correspond to different degrees of collaboration between the network device and the terminal device.

In a possible implementation, the configuration information includes first indication information, and the first indication information indicates whether the terminal device enables the AI function.

In a possible implementation, the configuration information includes a first condition threshold.

In a possible implementation, the first condition threshold includes either an AI inference result confidence threshold or a deviation threshold between an AI inference result and actual measurement information.

In a possible implementation, the configuration information includes area information, and the area information indicates an area in which the terminal device is allowed to enable the AI function.

In a possible implementation, when the configuration information indicates the terminal device to enable the AI function, the communication method further includes: sending a measurement configuration to the terminal device; and receiving a measurement report from the terminal device, where the measurement report includes the AI inference result, and the AI inference result is obtained based on the measurement configuration and an AI model for implementing the AI function.

In a possible implementation, the measurement report further includes at least one of second indication information, third indication information, and fourth indication information. The second indication information indicates that the AI inference result is a result obtained through inference based on the AI model, the third indication information indicates whether the AI inference result is consistent with the actual measurement information, and the fourth indication information indicates deployment node information and collaboration level information of the AI model.

In a possible implementation, the measurement report further includes one or more of indication information for suggesting whether to disable the AI function and KPI feedback information.

In a possible implementation, the communication method further includes: sending fifth indication information to the terminal device, where the fifth indication information indicates the terminal device to disable the AI function.

According to a third aspect, this application provides a communication method. The method may be applied to a terminal device, or may be applied to an apparatus (for example, a chip, a chip system, or a circuit) in the terminal device or an apparatus that can be used together with the terminal device. The following uses an example in which the method is applied to the terminal device for description. The method may include: enabling an AI model for implementing an AI function; receiving a measurement configuration from a network device; obtaining an AI inference result based on the measurement configuration and the AI model; and sending a measurement report to the network device, where the measurement report includes the AI inference result.

In the solution provided in this application, the terminal device may independently enable, without depending on configuration information from the network device, the AI model for implementing the AI function. After the AI function is enabled, the measurement report including the AI inference result is reported. When network performance deteriorates, the network device may determine, based on the measurement report, whether network performance deterioration is caused by an improper measurement configuration on a network side or caused by an inaccurate AI inference result on the terminal device side. Therefore, the network device may determine a cause of the network performance deterioration, and correspondingly use a policy to resolve a network performance deterioration problem, for example, adjust and resend the measurement configuration to the terminal device, or send, to the terminal device, indication information indicating the terminal device to disable the AI function, to improve management and control of the network device on the network performance, and reduce impact of enabling the AI function on the terminal device side on the network performance.

In a possible implementation, the measurement report further includes at least one of second indication information, third indication information, and fourth indication information. The second indication information indicates that the AI inference result is a result obtained through inference based on the AI model, the third indication information indicates whether the AI inference result is consistent with actual measurement information, and the fourth indication information indicates deployment node information and collaboration level information of the AI model.

In the solution provided in this application, the measurement report may not only include the AI inference result, but also include more of the foregoing information (for example, the second indication information, the third indication information, and the fourth indication information), so that the network device determines the cause of the network performance deterioration based on more information. This can improve accuracy of determining, by the network device, the cause of the network performance deterioration.

In a possible implementation, the measurement report further includes one or more of indication information for suggesting whether to disable the AI function and KPI feedback information.

In the solution provided in this application, the measurement report may not only include the AI inference result, but also include more of the foregoing information (for example, the indication information for suggesting whether to disable the AI function and the KPI feedback information), so that the network device determines the cause of the network performance deterioration based on more information, and may further determine, based on a suggestion from the terminal device, whether to indicate the terminal device to disable the AI function. This can not only improve the accuracy of determining, by the network device, the cause of the network performance deterioration, but also improve accuracy of management and control of the network side on the network performance.

In a possible implementation, the communication method further includes: receiving fifth indication information from the network device, where the fifth indication information indicates the terminal device to disable the AI function; and disabling the AI function based on the fifth indication information.

In the solution provided in this application, after receiving the measurement report from the terminal device, the network device may determine, based on the measurement report, whether a network exception or the network performance deterioration is caused by the improper configuration on the network side or caused by the inaccurate AI inference result on the terminal device side. In a possible implementation, if the network performance deterioration is caused by the inaccurate AI inference result on the terminal device side, the network device may send, to the terminal device, the fifth indication information indicating the terminal device to disable the AI function. After receiving the fifth indication information from the network device, the terminal device determines, based on the fifth indication information, to disable the AI function. The terminal device disables the AI function, obtains the measurement report by using a conventional measurement method, and then reports the measurement report to the network device for adjusting a mobility parameter, so that the network performance deterioration can be resolved, and the network performance can be improved.

According to a fourth aspect, this application provides a communication method. The method may be applied to a network device, or may be applied to an apparatus (for example, a chip, a chip system, or a circuit) in the network device or an apparatus that can be used together with the network device. The following uses an example in which the method is applied to the network device for description. The method may include: sending a measurement configuration to a terminal device; and receiving a measurement report from the terminal device, where the measurement report includes an AI inference result, and the AI inference result is obtained based on the measurement configuration and an AI model for implementing an AI function.

In the solution provided in this application, the terminal device may independently enable, without depending on configuration information from the network device, the AI model for implementing the AI function. After the AI function is enabled, the measurement report including the AI inference result is reported. When network performance deteriorates, the network device may determine, based on the measurement report, whether network performance deterioration is caused by an improper measurement configuration on a network side or caused by an inaccurate AI inference result on the terminal device side. Therefore, the network device may determine a cause of the network performance deterioration, and correspondingly use a policy to resolve a network performance deterioration problem, for example, adjust and resend the measurement configuration to the terminal device, or send, to the terminal device, indication information indicating the terminal device to disable the AI function, to improve management and control of the network device on the network performance, and reduce impact of enabling the AI function on the terminal device side on the network performance.

It should be understood that an execution body of the fourth aspect may be the network device, and specific content of the fourth aspect corresponds to content of the third aspect. For corresponding features of the fourth aspect and beneficial effects achieved by the fourth aspect, refer to descriptions of the third aspect. To avoid repetition, detailed descriptions are properly omitted herein.

In a possible implementation, the measurement report further includes at least one of second indication information, third indication information, and fourth indication information. The second indication information indicates that the AI inference result is a result obtained through inference based on the AI model, the third indication information indicates whether the AI inference result is consistent with actual measurement information, and the fourth indication information indicates deployment node information and collaboration level information of the AI model.

In a possible implementation, the measurement report further includes one or more of indication information for suggesting whether to disable the AI function and KPI feedback information.

In a possible implementation, the communication method further includes: sending fifth indication information to the terminal device, where the fifth indication information indicates the terminal device to disable the AI function.

According to a fifth aspect, an embodiment of this application provides a communication apparatus. The communication apparatus may be a terminal device, may be an apparatus (for example, a chip, a chip system, or a circuit) in the terminal device, or may be used in a logical module or software that can implement all or some functions of the terminal device. The communication apparatus has a function of implementing behavior in the method instance in the first aspect. For example, in a possible implementation, the communication apparatus includes:
a receiving unit, configured to receive configuration information of an AI function from a network device; and
a processing unit, configured to: determine, based on the configuration information, whether to enable the AI function.

The function may be implemented by hardware, or may be implemented by executing corresponding software by hardware. The hardware or software includes one or more modules corresponding to the foregoing function. For beneficial effects, refer to descriptions of the first aspect. Details are not described herein again.

According to a sixth aspect, an embodiment of this application provides a communication apparatus. The communication apparatus may be a network device, may be an apparatus (for example, a chip, a chip system, or a circuit) in the network device, or may be used in a logical module or software that can implement all or some functions of the network device. The communication apparatus has a function of implementing behavior in the method instance in the second aspect. For example, in a possible implementation, the communication apparatus includes:
an obtaining unit, configured to: obtain AI capability information of a terminal device, and determine that the terminal device supports an AI function; and
a sending unit, configured to send configuration information of the AI function to the terminal device, where the configuration information indicates whether the terminal device enables the AI function.

The function may be implemented by hardware, or may be implemented by executing corresponding software by hardware. The hardware or software includes one or more modules corresponding to the foregoing function. For beneficial effects, refer to descriptions of the second aspect. Details are not described herein again.

According to a seventh aspect, an embodiment of this application provides a communication apparatus. The communication apparatus may be a terminal device, may be an apparatus (for example, a chip, a chip system, or a circuit) in the terminal device, or may be used in a logical module or software that can implement all or some functions of the terminal device. The communication apparatus has a function of implementing behavior in the method instance in the third aspect. For example, in a possible implementation, the communication apparatus includes:
a processing unit, configured to enable an AI model for implementing an AI function;
a receiving unit, configured to receive a measurement configuration from a network device, where
the processing unit is further configured to obtain an AI inference result based on the measurement configuration and the AI model; and
a sending unit, configured to send a measurement report to the network device, where the measurement report includes the AI inference result.

The function may be implemented by hardware, or may be implemented by executing corresponding software by hardware. The hardware or software includes one or more modules corresponding to the foregoing function. For beneficial effects, refer to descriptions of the third aspect. Details are not described herein again.

According to an eighth aspect, an embodiment of this application provides a communication apparatus. The communication apparatus may be a network device, may be an apparatus (for example, a chip, a chip system, or a circuit) in the network device, or may be used in a logical module or software that can implement all or some functions of the network device. For example, in a possible implementation, the communication apparatus includes:
a sending unit, configured to send a measurement configuration to a terminal device; and
a receiving unit, configured to receive a measurement report from the terminal device, where the measurement report includes an AI inference result, and the AI inference result is obtained based on the measurement configuration and an AI model for implementing an AI function.

The communication apparatus has a function of implementing behavior in the method instance in the fourth aspect. The function may be implemented by hardware, or may be implemented by executing corresponding software by hardware. The hardware or software includes one or more modules corresponding to the foregoing function. For beneficial effects, refer to descriptions of the fourth aspect. Details are not described herein again.

According to a ninth aspect, a communication apparatus is provided. The communication apparatus may be a terminal device, or may be an apparatus (for example, a chip, a chip system, or a circuit) in the terminal device. The apparatus may include a processor, a memory, an input interface, and an output interface. The input interface is configured to receive information from a communication apparatus other than the communication apparatus, the output interface is configured to output information to a communication apparatus other than the communication apparatus, and the processor invokes a computer program stored in the memory to perform the communication method provided in any one of the first aspect or the implementations of the first aspect, or any one of the third aspect or the implementations of the third aspect.

According to a tenth aspect, a communication apparatus is provided. The communication apparatus may be a network device, or may be an apparatus (for example, a chip, a chip system, or a circuit) in the network device. The apparatus may include a processor, a memory, an input interface, and an output interface. The input interface is configured to receive information from a communication apparatus other than the communication apparatus, the output interface is configured to output information to a communication apparatus other than the communication apparatus, and the processor invokes a computer program stored in the memory to perform the communication method provided in any one of the second aspect or the implementations of the second aspect, or any one of the fourth aspect or the implementations of the fourth aspect.

According to an eleventh aspect, this application provides a communication system. The communication system includes at least one terminal device and at least one network device. When the at least one terminal device and the at least one network device run in the communication system, the at least one terminal device and the at least one network device are configured to perform the communication method according to any one of the first aspect to the fourth aspect.

According to a twelfth aspect, this application provides a computer-readable storage medium, and the computer-readable storage medium stores computer instructions. When the computer program or the computer instructions are run, the method in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect is performed.

According to a thirteenth aspect, this application provides a computer program product including executable instructions. When the computer program product runs on a communication device, the method in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect is performed.

According to a fourteenth aspect, this application provides a communication apparatus. The communication apparatus includes a processor, and may further include a memory, configured to implement the method in any one of the first aspect and the possible implementations of the first aspect, any one of the second aspect and the possible implementations of the second aspect, any one of the third aspect and the possible implementations of the third aspect, and any one of the fourth aspect and the possible implementations of the fourth aspect. The communication apparatus may be a chip system. The chip system may include a chip, or may include a chip and another discrete component.

### BRIEF DESCRIPTION OF DRAWINGS

To describe the technical solutions in embodiments of this application more clearly, the following briefly describes the accompanying drawings for describing embodiments.
FIG. 1 is a diagram of a network architecture according to an embodiment of this application;
FIG. 2 is a diagram of a network architecture of a network device according to an embodiment of this application;
FIG. 3 is a diagram of an application framework of an AI function in NR according to an embodiment of this application;
FIG. 4 is an interaction diagram of a communication method according to an embodiment of this application;
FIG. 5 is an interaction diagram of another communication method according to an embodiment of this application;
FIG. 6 is an interaction diagram of still another communication method according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of still another communication apparatus according to an embodiment of this application;
FIG. 10 is a diagram of a structure of still another communication apparatus according to an embodiment of this application;
FIG. 11 is a diagram of a structure of still another communication apparatus according to an embodiment of this application; and
FIG. 12 is a diagram of a structure of a terminal device according to an embodiment of this application.

### DESCRIPTION OF EMBODIMENTS

In descriptions of this application, unless otherwise specified, "/" means "or". For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, "at least one" may mean one or more, and "a plurality of" may mean two or more. "At least one of..." indicates the listed items and any combination thereof. For example, "at least one of A, B, and C" or "at least one of A, B, or C" may indicate the following six cases: Only A exists, only B exists, only C exists, both A and B exist, both B and C exist, both A and C exist, and A, B, and C all exist. Terms such as "first" and "second" do not limit a quantity and an execution sequence, and the terms such as "first" and "second" do not indicate a definite difference.

It should be noted that, in this application, terms such as "example" or "for example" are used to indicate an example, an instance, or an illustration. Any embodiment or design scheme described as an "example" or "for example" in this application should not be understood as being more preferred or having more advantages than another embodiment or design scheme. Exactly, use of the words such as "example" or "for example" is intended to present a related concept in a specific manner.

In the descriptions of this application, the "indication" may include a direct indication and an indirect indication, or may include an explicit indication and an implicit indication. Information indicated by a piece of information (for example, indication information described below) is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and the other part of the to-be-indicated information is known or pre-agreed on. In addition, specific information may alternatively be indicated by using a pre-agreed (for example, stipulated in a protocol) arrangement sequence of various pieces of information, to reduce indication overheads to some extent.

The following first describes a network architecture to which an embodiment of this application is applicable by using an example.

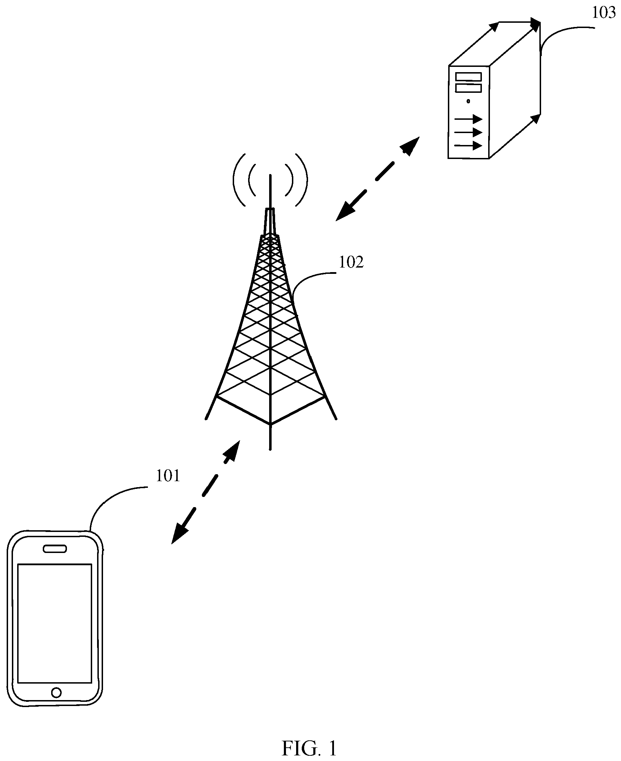

FIG. 1 is a diagram of a network architecture according to an embodiment of this application. As shown in FIG. 1, the network architecture may include a terminal device 101, a network device 102, and a core network device 103. The terminal device 101 may be connected to the network device 102 in a wireless manner, and may access the core network device 103 via the network device 102. The terminal device 101 may be located at a fixed position, or may be movable.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may further be applied to another communication system, for example, a public land mobile network (public land mobile network, PLMN) system, a long term evolution advanced (LTE advanced, LTE-A) system, a 5G system, an NR system, a machine to machine (machine to machine, M2M) system, or another future evolved communication system. This is not limited in embodiments of this application.

The terminal device 101 is an entity that is on a user side that is configured to receive or transmit a signal. The terminal device may be deployed on land, and includes an indoor device, an outdoor device, a handheld device, or a vehicle-mounted device. The terminal device may alternatively be deployed on water (for example, on a ship), or may be deployed in air (for example, on an airplane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (telemedicine), a wireless terminal device in a smart grid (smart grid), a wireless terminal in transportation safety (transportation safety), a wireless terminal device in a smart city (smart city), or a wireless terminal in a smart home (smart home), or may be user equipment (user equipment, UE), or the like.

The network device 102 may be an entity configured to transmit or receive a signal, or may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects a terminal to the wireless network. Currently, some examples of RAN nodes are a base station, a next generation NodeB (next generation NodeB, gNB), a transmission reception point (transmission reception point, TRP), an eNB, a home base station, a baseband unit (baseband unit, BBU), or an access point (access point, AP) in a Wi-Fi system. In the network structure provided in this application, the network device may be a RAN device that includes a central unit (central unit, CU) node, a distributed unit (distributed unit, DU) node, or a CU node and a DU node.

In operations, administration, and maintenance (operations, administration, and maintenance, OAM), based on actual requirements of network operation of an operator, network management work is usually classified into three types: operations (operations), administration (administration), and maintenance (maintenance). The operations mainly analyze, forecast, plan, and configure a routine network and services. The maintenance mainly performs routine operation activities such as testing and fault management of a network and a service of the network. The OAM can detect a network running status, optimize a network connection and network performance, improve network stability, and reduce network maintenance costs.

An AI model is a module having a machine learning computing capability. In a wireless communication system, the AI module may be located in the OAM, or may be located in the network device. If the network device uses a CU-DU split architecture, the AI module may be located in a CU, or the AI module may be located in UE, or may be independent as a network element entity, for example, a RAN intelligent control center (RAN Intelligent Controller, RIC). A main function of the AI module in the wireless communication system is to perform a series of AI computing such as model establishment, training approximation, and reinforcement learning based on input data (in the wireless communication system, the input data is generally network running data provided by a RAN side or monitored by the OAM, for example, a network load and channel quality). A trained model provided by the AI module has a prediction function for a network change on the RAN side, and may be usually used for load prediction, UE trajectory prediction, and the like. In addition, the AI module may further perform policy inference from perspectives such as network energy saving and mobility optimization based on a prediction result of the trained model for RAN network performance, to obtain a proper and efficient energy saving policy, a mobility optimization policy, and the like. When the AI module is located in the OAM, a current northbound interface may be reused for communication between the AI module and the network device. When the AI module is located in the network device or the CU, current interfaces such as an F1 interface, an Xn interface, and a Uu interface may be reused. When the AI module is independent as a network entity, communication links to the OAM, the RAN side, and the like need to be re-established, for example, based on a wired link or a wireless link.

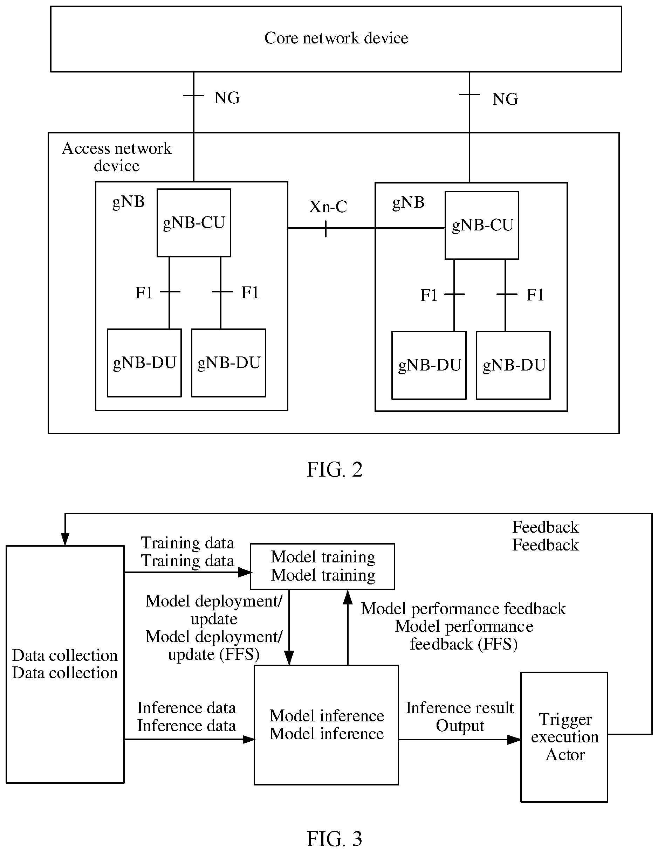

Further, FIG. 2 is a diagram of a network architecture of a network device according to an embodiment of this application. As shown in FIG. 2, the network device may also be referred to as an access network device. The access network device may be connected to a core network device (for example, an LTE core network or a 5G core network) through an NG interface, and access network devices may be connected through an Xn-C interface. The network device may use a CU-DU split structure. It may be understood that a base station is divided into a CU and a DU from a perspective of a logical function. The CU and the DU may be physically separated or may be deployed together. A plurality of DUs may share one CU. One DU may alternatively be connected to a plurality of CUs (not shown in the figure). The CU and the DU may be connected through an interface, for example, an F1 interface. The CU and the DU may be obtained through division based on protocol layers of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that, division into processing functions of the CU and the DU based on the protocol layers is merely an example, and there may be other division. For example, the CU or the DU may have functions of more protocol layers through division. For example, the CU or the DU may alternatively have a part of processing functions of the protocol layers through division. In a design, a part of functions of the RLC layer and functions of a protocol layer above the RLC layer are set on the CU, and remaining functions of the RLC layer and functions of a protocol layer below the RLC layer are set on the DU. In another design, functions of the CU or the DU may alternatively be obtained through division based on a service type or another system requirement. For example, division is performed based on a delay, a function whose processing time needs to meet a delay requirement is set on the DU, and a function whose processing time does not need to meet the delay requirement is set on the CU. In another design, the CU may alternatively have one or more functions of a core network. One or more CUs may be disposed in a centralized manner or a separated manner. For example, the CUs may be disposed on a network side for ease of centralized management. The DU may have a plurality of radio frequency functions, or the radio frequency functions may be set remotely.

The functions of the CU may be implemented by one entity, or may be implemented by different entities. For example, the functions of the CU may be further divided, for example, separated into a control plane (control plane, CP) and a user plane (user plane, UP), namely, a CU control plane (CU-CP) and a CU user plane (CU-UP). For example, the CU-CP and the CU-UP may be implemented by different functional entities, and are connected through an E1 interface. The CU-CP and the CU-UP may be coupled to the DU, to jointly perform functions of the base station. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be noted that quantities and types of network devices, terminal devices, and core network devices included in the network architecture shown in FIG. 1 are merely examples. Embodiments of this application are not limited thereto. For example, more or fewer terminal devices that communicate with the network device may be further included. For example, more or fewer core network devices that communicate with the network device may be further included. For brevity of description, details are not described in the accompanying drawings. In addition, in the network architecture shown in FIG. 1, although the network device, the terminal device, and the core network device are shown, the application scenario may include but is not limited to the network device, the terminal device, and the core network device. For example, the application scenario may further include a device configured to bear a virtualized network function. This is clear to a person skilled in the art, and details are not described herein.

The following first provides definitions of technical terms that may appear in embodiments of this application. Terms used in the implementations of this application are merely used to explain specific embodiments of this application, but are not intended to limit this application.

### (1) AI Function

FIG. 3 is a diagram of an application framework of an AI function in NR according to an embodiment of this application. As shown in FIG. 3, data collection (data collection) storage may include data input from a network device, a CU, a DU, a terminal device, or another management entity, and is used as a database for AI model training and data analysis and inference. Model training (model training) is for analyzing training data (training data) provided by data collection to provide an optimal AI model. Model inference (model inference) means using an AI model to provide AI-based reasonable inference for network running or guide a network to perform policy adjustment based on data provided through data collection. Related policy adjustment is performed by a trigger execution entity (Actor). In addition, after a related policy is applied, specific performance of the network, for example, various performance parameters, is input to the database again for storage.

### (2) Collaboration level (collaboration level) of the AI model

Considering deployment of the AI model and interaction between the terminal device and the network device, possible collaboration levels (collaboration levels) may be classified into three types: a level 0 AI collaboration function (level 0 for short), a level 1 AI collaboration function (level 1 for short), and a level 2 AI collaboration function (level 2 for short).

The level 0 is also referred to as no collaboration (No collaboration). In the level 0, an AI model of the network device is completely invisible to the terminal device. Training and inference of the AI model are completed inside the network device, and information about the model or information about a model instance is not sent to the terminal device over an air interface.

The level 1 is also referred to as signaling-based collaboration without model transfer (signaling-based collaboration without model transfer). In the level 1, in a possible implementation, the network device sends an instance of the AI model, that is, a dictionary, to the terminal device, and the terminal device uses the dictionary to assist the network device in performing AI inference. This affects the air interface. The terminal device performs channel compression coding based on the dictionary. Optionally, an AI model may also be deployed inside the terminal device. When the AI model is deployed in the terminal device, the terminal device performs channel compression coding based on the AI model and a dictionary received from the network device. The terminal device and the network device may perform joint model training, for example, perform model training in a federated learning manner. The terminal device and the network device do not directly transmit the model over the air interface, but may transmit a model parameter, a weight, and the like.

The level 2 is also referred to as signaling-based collaboration with model transfer (signaling-based collaboration with model transfer). In the level 2, the AI model is deployed in each of the network device and the terminal device, and both the network device and the terminal device can perform inference. In addition, the information about the AI model can be exchanged over the air interface. A difference between the level 2 and the level 1 includes that in the level 2, the information about the AI model can be transmitted over the air interface.

It may be understood that a name of the level 0/1/2 is merely an example. For example, the level 0 may alternatively be represented by a level x, the level 1 may alternatively be represented by a level y, and the level 2 may alternatively be represented by a level z. This is not limited in this application.

### (3) AI use case (use case)

The AI use case is also referred to as an AI application scenario or the AI function. AI use cases include but are not limited to: channel state information (channel status information, CSI) feedback enhancement (CSI feedback enhancement), beam management enhancement (beam management enhancement), positioning enhancement (positioning accuracy enhancement), network energy saving (network energy saving), load balancing (load balancing), and mobility optimization (mobility optimization). Descriptions are separately provided below. For example, one AI function may include a plurality of AI sub-functions.

### 1. CSI feedback enhancement

CSI is a channel attribute of a communication link, and is channel quality information reported by the terminal device to the network device. The terminal device reports the channel quality information to the network device, to select a proper modulation and coding scheme (modulation and coding scheme, MCS) for the terminal device, so that the terminal device can adapt to a changed radio channel. For example, the terminal device performs channel estimation based on a received channel state information-reference signal (channel state information-reference signal, CSI-RS), and then feeds back the channel quality information to the network device. The information is used as an input of the model of the network device, so that the network device implements AI model training. AI is applied to the CSI feedback enhancement, so that overheads can be reduced, accuracy can be improved, prediction can be implemented, and the like.

CSI-RS feedback enhancement may include at least one sub-function, for example, CSI compression, CSI prediction, and CSI-RS configuration signaling reduction. The CSI compression may be further classified into CSI compression in at least one of space domain, time domain, and frequency domain.

### 2. Beam management enhancement

BM is mainly for discovering a strongest transmit/receive beam pair (beam pair). AI-based sparse beam prediction can improve the accuracy. Based on AI training and inference, the AI-based sparse beam prediction may be classified into AI sparse beam prediction on a network side and AI sparse beam prediction on the terminal device side. The AI sparse beam prediction on the terminal device side is used as an example. A pre-trained AI model on the terminal device side may be delivered by the network side, or may be pre-stored on the terminal device side. In a training phase, the network device sweeps all possible beams, and then the network needs to notify the terminal device of a transmit beam pattern. When the model training is completed, the network needs to sweep only a small part of beams, and then the terminal device feeds back an inference result to the network. AI-based beam management can implement, for example, beam prediction in time domain and/or space domain, to reduce overheads and a delay, and improve beam selection accuracy.

The beam management enhancement may include at least one sub-function, for example, beam sweeping matrix prediction and optimal beam prediction.

### 3. Positioning enhancement

In a line of sight (line of sight, LOS) transmission scenario or a non-line of sight (not line of sight, NLOS) transmission scenario, AI-based positioning can improve positioning accuracy with a small quantity of TRP antennas. The positioning enhancement may include at least one sub-function, for example, positioning enhancement based on an access network device, positioning enhancement based on a positioning management function network element, and positioning enhancement based on the terminal device.

### 4. Network energy saving

The network energy saving may be adjusted through cell activation/deactivation (cell activation/deactivation), load reduction, coverage improvement, or another RAN setting. An AI technology may be used to optimize an energy saving decision by using data collected in a RAN network. An AI algorithm can be used to predict energy efficiency and a load status in a next periodicity. This can be used to assist in cell activation/deactivation decision-making to save energy. Based on a predicted load, a system can dynamically configure an energy saving policy to balance system performance and energy efficiency and reduce energy consumption.

### 5. Load balancing

The load balancing enables loads to be evenly distributed between cells and between areas in the cell, or transfers some traffic from a congested cell, or allows a user to perform traffic distribution in a cell, a carrier, or an access mode, to improve network performance. Load balancing performance is improved based on the AI model. For example, various measurements, feedback, historical data, and the like of the terminal device and a network node are input to the AI model to improve the load balancing performance, so that higher-quality user experience can be provided, and a system capacity can be improved.

### 6. Mobility management

The mobility management is a solution that ensures service continuity during movement of the terminal device by minimizing a call drop, a radio link failure (radio link failure, RLF), unnecessary handover, and a ping-pong effect. AI can enhance the mobility management, for example, reduce a probability of an unexpected event, predict a position, mobility, or performance of the terminal device, and guide traffic.

### (4) Radio resource control (radio resource control, RRC) status

In a connected (connected) state, the terminal device establishes an RRC connection to the network device for data transmission.

In an idle (idle) state, the terminal device does not establish an RRC connection to the network device, and the network device does not have a context of the terminal device. If the terminal device needs to enter a connected state from the idle state, the terminal device needs to initiate an RRC connection establishment process.

In an inactive (inactive) state, the terminal device first enters a connected state, then the network device releases an RRC connection, and the network device and the terminal device store a context. If the terminal device needs to enter the connected state from the inactive state, the terminal device needs to initiate an RRC connection resume process. In comparison with an RRC establishment process, the RRC resume process has a shorter delay and fewer signaling overheads.

It should be understood that the definitions of the foregoing technical terms are merely examples. For example, with continuous development of technologies, the scope of the foregoing definitions may also change. This is not limited in embodiments of this application.

It can be learned from the foregoing descriptions of the AI use case that the AI may be widely used in aspects of the channel state information (channel state information, CSI) feedback enhancement, the beam management, the positioning accuracy enhancement, the energy saving, the mobility optimization, the load balancing, and the like, to improve the network performance. The AI model may be usually deployed on the network side or the terminal side. How to improve network performance when the AI model is enabled is an urgent problem to be resolved.

Technical problems to be resolved in embodiments of this application may include: (1) how to manage enabling/disabling of the AI model on the terminal device side by using the network device; (2) how to improve management and control of the network performance on the network side, to reduce impact of enabling the AI model on the terminal device side on the network performance.

This application provides a communication method. The following separately describes the communication method by using the following embodiments. It should be understood that these communication methods may be used in combination with each other.

It should be understood that AI evolution may change with evolution of the technical solutions. The technical solutions provided in this application are not limited to the processes described below. Further, descriptions of the scenarios in embodiments of this application are merely examples, and the solutions in embodiments of this application are not limited to being applicable to only the described scenarios, and are also applicable to a scenario in which a similar problem exists.

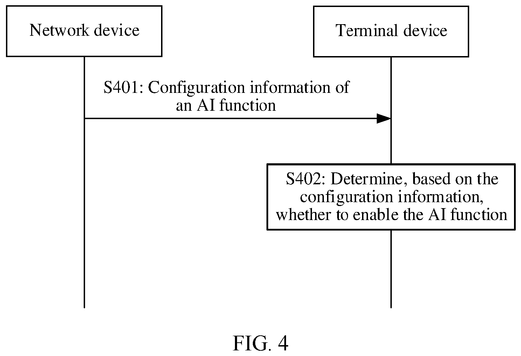

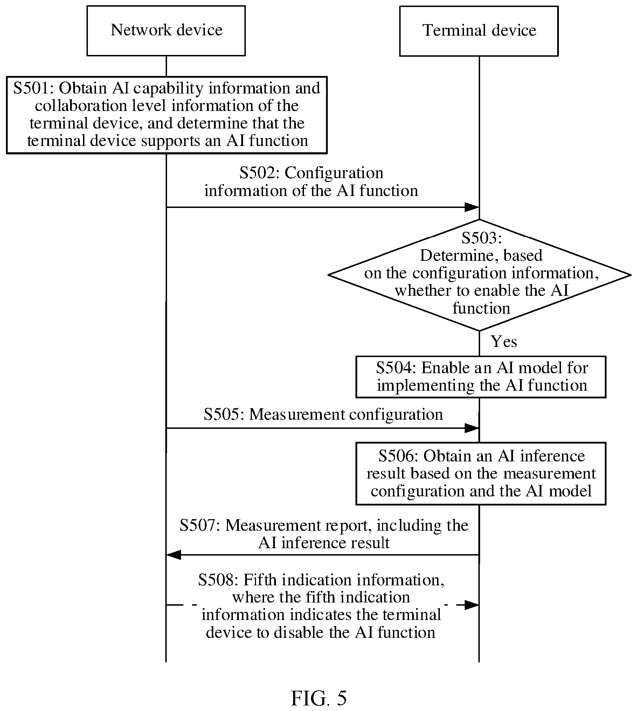

The terminal device in embodiments (for example, the following embodiments corresponding to FIG. 4 and FIG. 5) of this application may be the terminal device in the network architecture shown in FIG. 2. Functions performed by the terminal device in embodiments may alternatively be performed by an apparatus (for example, a chip, a chip system, or a circuit) in the terminal device. The network device in embodiments may be the network device in the network architecture shown in FIG. 2. Functions performed by the network device in embodiments may alternatively be performed by an apparatus (for example, a chip, a chip system, or a circuit) in the network device. Embodiments of this application are uniformly described herein, and details are not described below again.

It should be noted that FIG. 4 and FIG. 5 are described by using an example in which the network device delivers configuration information to a single terminal device. Embodiments are not limited to a single terminal device. For management configuration and subsequent procedures for AI function enabling of a plurality of terminal devices, refer to the flowcharts shown in FIG. 4 and FIG. 5.

With reference to the foregoing network architecture, the following describes a communication method provided in an embodiment of this application. FIG. 4 is an interaction diagram of a communication method according to an embodiment of this application. As shown in FIG. 4, the communication method may include S401 and S402.

S401: A network device sends configuration information of an AI function to a terminal device. Correspondingly, the terminal device receives the configuration information of the AI function from the network device.

The AI function may include at least one type of AI function, and different types of AI functions correspond to different degrees of collaboration between the network device and the terminal device. It may be understood that different types of AI functions may also be referred to as different AI collaboration levels. For example, the AI functions may include a level 0, a level 1, and a level 2. For detailed descriptions of the AI collaboration level, refer to the foregoing related content.

The configuration information may be from a core network device, the network device, or OAM. The configuration information may be delivered by the network device to the terminal device by using an RRC reconfiguration message (RRC Reconfiguration message) or an RRC release message (RRC Release message).

S402: The terminal device determines, based on the configuration information, whether to enable the AI function.

After receiving the configuration information of the AI function from the network device, the terminal device may determine, based on the configuration information, whether to enable the AI function. The terminal device may support one or more types of AI functions. For example, the terminal device may support the level 0, the terminal device may support the level 1, the terminal device may support the level 2, the terminal device may support the level 0 and the level 1, or the terminal device may support the level 0, the level 1, and the level 2.

When determining, based on the configuration information, whether to enable the AI function, the terminal device may be in an RRC connected state, or may be in an RRC idle state. If the terminal device is in the RRC connected state, the terminal device may obtain the configuration information from the RRC reconfiguration message. If the terminal device is in the RRC idle state, the terminal device may obtain the configuration information from the RRC release message.

The terminal device may determine, based on the configuration information, whether to enable the AI function in any one of the following possible implementations.

In a first possible implementation, the configuration information includes first indication information, and the first indication information indicates whether the terminal device enables the AI function. For example, the first indication information may include one or more bits. For example, one bit indicates whether the terminal device enables the AI function. For example, if a value of the bit is "0", it indicates that the terminal device does not enable the AI function; or if a value of the bit is "1", it indicates that the terminal device enables the AI function. For another example, the first indication information may be a Boolean value. For example, if a value of the first indication information is "True", it indicates that the terminal device enables the AI function; or if a value of the first indication information is "False", it indicates that the terminal device does not enable the AI function.

That the terminal device determines, based on the configuration information, whether to enable the AI function may be understood as that the terminal device determines, based on the first indication information, whether to enable the AI function. For example, the first indication information is one bit. If the value of the first indication information is "0", the terminal device determines not to enable the AI function; or if the value of the first indication information is "1", the terminal device determines to enable the AI function.

In a second possible implementation, first indication information indicates the terminal device to enable the AI function, and the terminal device receives the first indication information from the network device, and determines to enable the AI function. If the network device determines not to indicate the terminal device to enable the AI function, the network device does not send the first indication information to the terminal device. Correspondingly, if the terminal device receives no first indication information from the network device within preset time, the terminal device determines not to enable the AI function. For example, a timer may be disposed in the terminal device. If the terminal device receives no first indication information when the timer expires, the terminal device determines not to enable the AI function.

In a third possible implementation, the configuration information includes a first condition threshold. The first condition threshold may include either an AI inference result confidence threshold or a deviation threshold between an AI inference result and actual measurement information.

The AI inference result confidence threshold may be a proportion value, and may be understood as an accuracy threshold of the AI inference result. For example, the accuracy threshold of the AI inference result is 90%. The deviation threshold between the AI inference result and the actual measurement information may be understood as a threshold like an absolute value of a difference, a variance, or a mean square error between the AI inference result and the actual measurement information. The AI inference result and the actual measurement information may include one or more of reference signal received power (reference signal receiving power, RSRP), reference signal received quality (reference signal receiving quality, RSRQ), an available signal to interference plus noise ratio (signal to interfere plus noise ratio, SINR) of a serving cell, a downlink rate, and the like. In addition, the deviation threshold may be replaced with a matching degree threshold. The matching degree threshold may be a proportion value. It may be understood as that the closer the absolute value of the difference between the AI inference result and the actual measurement information is to the deviation threshold, the higher a matching degree is.

That the terminal device determines, based on the configuration information, whether to enable the AI function may be understood as that when the AI inference result of the terminal device meets the first condition threshold, the terminal device determines to enable the AI function; or when the AI inference result of the terminal device does not meet the first condition threshold, the terminal device determines not to enable the AI function.

For example, the first condition threshold is the AI inference result confidence threshold, and is assumed to be 90%. The AI inference result of the terminal device includes accuracy of AI inference, and the accuracy of the AI inference is compared with 90%. If the accuracy of the AI inference is greater than or equal to (or greater than) 90%, the terminal device determines to enable the AI function; or if the accuracy of the AI inference is less than (or less than or equal to) 90%, the terminal device determines not to enable the AI function.

For example, the first condition threshold is the deviation threshold between the AI inference result and the actual measurement information. For example, for CSI feedback enhancement, the AI inference result and the actual measurement information may be the RSRP, for example, the deviation threshold is 10 dB. If an absolute value of a difference between RSRP obtained through AI inference and RSRP obtained through actual measurement is less than (or less than or equal to) 10 dB, the terminal device determines to enable the AI function. If an absolute value of a difference between RSRP obtained through AI inference and RSRP obtained through actual measurement is greater than (or greater than or equal to) 10 dB, the terminal device determines not to enable the AI function. For example, the RSRP obtained through AI inference is -101 dB, the RSRP obtained through actual measurement by the terminal device is -90 dB, and the absolute value of the difference between the RSRP obtained through AI inference and the RSRP obtained through actual measurement is 11 dB, which is greater than 10 dB. In this case, the terminal device determines not to enable the AI function.

For another example, for CSI feedback enhancement, the AI inference result may be predicted CSI information. To be specific, the network device does not need to deliver a CSI-RS, the terminal device may report the predicted CSI information to the network device, and the network device determines an MCS and a downlink rate of delivered data based on the received CSI information. The network device sends, to the terminal device, the downlink rate and a correspondence between the downlink rate based on experience or statistics (legacy) and the RSRP, for the terminal device to evaluate the AI inference result. The terminal device may determine, based on the RSRP obtained through actual measurement and the correspondence between the downlink rate and the RSRP, a downlink rate corresponding to the RSRP obtained through actual measurement. It is assumed that the RSRP obtained through actual measurement is -90 dB. In this case, the downlink rate corresponding to the RSRP obtained through actual measurement is 100M. It is assumed that a deviation threshold between the downlink rate in the AI inference result and the downlink rate corresponding to the RSRP obtained through actual measurement is 5M. In this case, when the downlink rate in the AI inference result of the terminal device is greater than (or greater than or equal to) 95M, it is determined to enable the AI function; or when the downlink rate in the AI inference result of the terminal device is less than (or less than or equal to) 95M, it is determined not to enable the AI function.

In a fourth possible implementation, the configuration information includes area information, and the area information indicates an area in which the terminal device is allowed to enable the AI function. For example, the area may include one or more cells. It may be understood that some cells may support the terminal device in enabling the AI function, and some cells do not support the terminal device in enabling the AI function. The area information may include information such as a cell identifier list (cell ID list), a tracking area list (tracking area, TA list), and PLMN wide (PLMN wide) that are within a management range of the network device and that support the terminal device in enabling the AI function. For example, the area information may indicate a cell 0, a cell 1, and a cell 2, indicating that these cells can support the terminal device in enabling the AI function.

That the terminal device determines, based on the configuration information, whether to enable the AI function may be understood as that the terminal device determines, based on the area information, whether to enable the AI function. For example, when the terminal device is located in the cell 0, the cell 1, or the cell 2, the terminal device may automatically enable the AI function.

It should be noted that, when the configuration information includes the area information, the terminal device may determine, without depending on the first indication information that is from the network device and that indicates whether to enable the AI function, whether to enable the AI function. In other words, it is considered by default that the area included in the area information supports the terminal device in enabling the AI function. When the terminal device is located in the area indicated by the area information, the terminal device enables the AI function.

In a fifth possible implementation, the configuration information includes first indication information and area information. To be specific, the network device may indicate both the first indication information and the area information to the terminal device, and the first indication information and the area information are jointly used for determining whether the terminal device enables the AI function.

That the terminal device determines, based on the configuration information, whether to enable the AI function may be understood as that the terminal device determines, based on the first indication information and the area information, whether to enable the AI function. For example, when the first indication information indicates the terminal device to enable the AI function, the terminal device determines to enable the AI function in an area indicated by the area information. When the terminal device is located in the area indicated by the area information, if the first indication information indicates the terminal device not to enable the AI function, the terminal device determines not to enable the AI function.

It should be noted that, when the configuration information includes the first indication information and the area information, the terminal device determines, depending on the first indication information, whether to enable the AI function. Even if the area indicated by the area information supports the terminal device in enabling the AI function, the terminal device determines to enable the AI function only when the first indication information indicates to enable the AI function.

In this embodiment, the network device may manage whether to enable the AI function on the terminal device side, to improve management and control of a network side on network performance, and reduce impact of enabling the AI function on the terminal device side on the network performance.

With reference to the foregoing embodiment in FIG. 4, the following describes another communication method provided in an embodiment of this application. It should be understood that, for explanations of terms in different embodiments of this application, reference may be made to each other. To avoid redundant descriptions, a same term may not be described in different embodiments. FIG. 5 is an interaction diagram of another communication method according to an embodiment of this application. As shown in FIG. 5, the communication method may include S501 to S508. S508 is an optional step.

S501: A network device obtains AI capability information of a terminal device, and determines that the terminal device supports an AI function.

The AI capability information of the terminal device may be whether the terminal device supports the AI function. The terminal device may support one or more types of AI functions. For descriptions of various types of AI functions, refer to the foregoing related content.

The network device may obtain the AI capability information of the terminal device. Optionally, the network device may further obtain collaboration level information of the terminal device, for example, whether the terminal device supports the AI function, and when the terminal device supports the AI function, which types of AI functions are supported by the terminal device. That is, the type of the AI function may correspond to the collaboration level information of the terminal device.

The network device may obtain the AI capability information and the collaboration level information of the terminal device from the terminal device or OAM. For example, the AI capability information and the collaboration level information of the terminal device may correspond to a model of the terminal device. When the terminal device is communicatively connected to the network device, the network device may determine the AI capability information and the collaboration level information of the terminal device based on the model of the terminal device. Alternatively, the network device may send, to the OAM, request information for requesting the AI capability information and the collaboration level information of the terminal device, to obtain the AI capability information and the collaboration level information of the terminal device.

In an implementation, the network device may send a terminal device capability enquiry message (UECapabilityEnquiry message) to the terminal device to enquire about the AI capability information and the collaboration level information of the terminal device (where in this case, the terminal device may be in an RRC connected state), and the terminal device sends a terminal device capability information message (UECapabilityInformation message) to the network device to report the AI capability information and the collaboration level information of the terminal device. Based on this, the network device may determine whether the terminal device supports the AI function and a collaboration level of the AI function supported by the terminal device, for example, determine that the terminal device supports a level 0. In a possible implementation, when the network device is in a CU-DU split architecture, a CU of the network device is further divided into a CU-CP and a CU-UP, and the CU-CP is further divided into a CU-CP 1 and a CU-CP 2. The CU-CP 2 receives the terminal device capability information message from the terminal device, and forwards the message to the CU-CP 1, and then the CU-CP 1 determines whether the terminal device supports the AI function and the collaboration level of the AI function supported by the terminal device.

After obtaining the AI capability information of the terminal device, the network device may determine that the terminal device supports the AI function.

S502: The network device sends configuration information of the AI function to the terminal device. Correspondingly, the terminal device receives the configuration information of the AI function from the network device.

It may be understood that for specific descriptions of step S502, refer to step S401. Details are not described again.

S503: The terminal device determines, based on the configuration information, whether to enable the AI function.

It may be understood that for specific descriptions of step S503, refer to step S402. Details are not described again.

When the terminal device determines, based on the configuration information, to enable the AI function, step S504 is performed.

S504: The terminal device enables an AI model for implementing the AI function.

The terminal device supports the AI function, and may implement the AI function by enabling the AI model. For example, the AI function is CSI compression, and the terminal device may train a CSI encoder of the terminal device by using an auto-encoder (auto-encoder) AI model, to implement the AI function of CSI compression. For another example, the AI function is load balancing, and the terminal device may implement the AI function of load balancing by using a backpropagation-based deep neural network AI model.

It may be understood that an AI model enabled/activated by the terminal device may be at least one AI model that implements the AI function. There may be one or more collaboration levels. For example, the terminal device may enable the level 0, the terminal device may enable the level 0 and a level 1, or the terminal device may enable the level 0, the level 1, and a level 2. The AI model enabled by the terminal device may be an original AI model, or may be a trained and optimized AI model.

S505: The network device sends a measurement configuration to the terminal device. Correspondingly, the terminal device receives the measurement configuration from the network device.

The network device may send the measurement configuration to the terminal device, and the terminal device may perform measurement based on the measurement configuration, to obtain an actual measurement result.

For example, the network device may perform all beam sweeping, or perform synchronization signal and physical broadcast channel (physical broadcast channel, PBCH) block (synchronization signal and PBCH block, SSB) beam sweeping, to obtain the measurement configuration. For example, in a CSI scenario, the measurement configuration may include a CSI-RS. In a beam management scenario, the measurement configuration may include the SSB beam sweeping. In a positioning accuracy enhancement scenario, the measurement configuration may include a positioning reference signal.

It should be noted that there may be no execution sequence of step S505, step S501, and step S502.

S506: The terminal device obtains an AI inference result based on the measurement configuration and the AI model.

Beam management enhancement is used as an example for description. When both a training node and an inference node of the AI model are in a closed loop inside the terminal device (UE-oriented AI/ML BM), after enabling the AI model for implementing the AI function, the terminal device receives the measurement configuration from the network device as a training input (for example, the SSB beam sweeping). Model training is completed inside the terminal device, and the terminal device may generate k (where k is a positive integer) pieces of optimal beam information based on the AI inference result. Subsequently, the terminal device may feed back, to the network device, information such as the k pieces of optimal beam information and an optimal CSI-RS identifier that are based on the AI inference result.

CSI enhancement is used as an example for description. When both a training node and an inference node of the AI model are in a closed loop inside the terminal device, after the terminal device enables the AI model for implementing the AI function, the terminal device uses the measurement configuration, for example, the CSI-RS received from the network device as a training input. Model training is completed inside the terminal device, and information such as a CQI, a precoding matrix indicator (precoding matrix indicator, PMI), and a CSI-RS resource indicator (CSI-RS resource indicator, CRI) that are optimized based on the AI inference result is obtained.

It should be noted that the AI function is not limited to the foregoing cases. The AI inference result obtained after the terminal device enables the AI function may alternatively be for different objectives, for example, specific prediction results and policy instructions of network energy saving and mobility optimization. For example, for network energy saving, AI inference results may include an energy saving measure, duration, a load threshold of entering or exiting an energy saving state, and the like.

S507: The terminal device sends a measurement report to the network device, where the measurement report includes the AI inference result.

For example, the measurement report may be sent in an event-triggered/periodical sending manner, or sent based on an indication. For example, after obtaining the AI inference result, the terminal device may send the measurement report to the network device. Alternatively, the terminal device may periodically send the measurement report to the network device, where a periodicity may be 0.5s/time, 1s/time, 5s/time, or the like. Alternatively, after receiving, from the network device, indication information indicating to send the measurement report, the terminal device sends the measurement report to the network device based on the indication information. An implementation in which the terminal device sends the measurement report is not limited in this embodiment. In addition, a message carrying the measurement report is not limited in this application. For example, the terminal device may send the measurement report to the network device by using a MeasurementReport message.

The measurement report includes the AI inference result. For example, for beam management enhancement, the measurement report may include the information such as the k pieces of optimal beam information and the optimal CSI-RS ID that are based on the AI inference result. For example, for CSI enhancement, the measurement report may include the information such as the CQI, the PMI, and the CSI-RS CRI that are optimized based on the AI inference result.

For example, the measurement report may further include any one or more of the following:
second indication information, where the second indication information indicates that the AI inference result is a result obtained through inference based on the AI model;
third indication information, where the third indication information indicates whether the AI inference result is consistent with the actual measurement result; and
fourth indication information, where the fourth indication information indicates deployment node information (where for example, the AI model is deployed on the terminal device side) and collaboration level information of the AI model.

For example, the measurement report may further include one or more of a type of the AI model (for example, the original AI model or the trained and optimized AI model), parameter adjustment information of the AI model (for example, parameter adjustment information of the trained and optimized AI model relative to the original AI model), indication information for suggesting whether to disable the AI function, and KPI feedback information. After obtaining the AI inference result, the terminal device may independently determine whether the AI inference result is consistent with the actual measurement result, or whether a deviation between the AI inference result and the actual measurement result exceeds a deviation threshold, and may report the indication information for suggesting whether to disable the AI function. The KPI feedback information may be information obtained through actual measurement by the terminal device. For example, in a CSI feedback enhancement scenario, the KPI feedback information may include a downlink rate and the like. For another example, in a beam management enhancement scenario, the KPI feedback information may include prediction accuracy of K optimal beams and the like. For still another example, in the positioning accuracy enhancement scenario, the KPI feedback information may include indication information indicating time of arrival (TOA) of a channel of a LOS path and the like, or include indication information indicating whether a LOS/NLOS state obtained through AI model inference is accurate and the like.

After receiving the KPI feedback information from the terminal device, the network device may determine, based on the KPI feedback information, whether the AI inference result of the AI model is accurate, to determine whether to disable the AI function of the terminal device.

In an implementation, beam management enhancement is used as an example for description. The terminal device may determine, based on the AI inference result, an SSB for sending a message 1 (msg 1) in a random access procedure. However, using the SSB causes an increase in a random access channel (random access channel, RACH) delay or a RACH failure. The terminal device may include, in a recorded random access report (RACH report), indication information indicating that a determined uplink SSB is obtained based on the AI inference result. Alternatively, the terminal device detects a beam failure (beam failure), and determines, based on the AI inference result, a recovery beam from candidate beams that can be used to perform beam failure recovery (beam failure recovery, BFR). In other words, the terminal device does not perform measurement, and selects the recovery beam based on the AI inference result to perform BFR. If the BFR fails, the terminal device reports the measurement report, and indicates, to the network device, that the recovery beam selected by the terminal device is obtained based on the AI inference result. In this way, the network device can determine that a cause of the beam failure recovery is that the selected beam is not applicable to the beam failure recovery due to the improper AI model on the terminal device side. Therefore, the network device may indicate the terminal device to optimize or disable the AI model on the terminal device side.

After receiving the measurement report from the terminal device, the network device may determine, based on the measurement report, whether a network exception or network performance deterioration is caused by an improper configuration on a network side or caused by an inaccurate AI inference result on the terminal device side.

In a possible implementation, if the network exception or the network performance deterioration is caused by the improper measurement configuration on the network side, the network device may adjust and resend the measurement configuration to the terminal device.

In a possible implementation, if the network exception or the network performance deterioration is caused by the inaccurate AI inference result on the terminal device side, the network device may send, to the terminal device, the indication information indicating the terminal device to disable the AI function, and the terminal device determines, based on the indication information, to disable the AI function. In this implementation, the method further includes S508: The network device sends fifth indication information to the terminal device, where the fifth indication information indicates the terminal device to disable the AI function. Correspondingly, the terminal device receives the fifth indication information from the network device.

In this embodiment, it is proposed that after determining, based on the configuration information from the network device, to enable the AI function, the terminal device reports the measurement report including the AI inference result. When network performance deteriorates, the network device may determine, based on the measurement report, whether the network performance deterioration is caused by the improper measurement configuration on the network side or caused by the inaccurate AI inference result on the terminal device side. Therefore, the network device may determine a cause of the network performance deterioration, and correspondingly use a policy to resolve a network performance deterioration problem, for example, adjust and resend the measurement configuration to the terminal device, or send, to the terminal device, the indication information indicating the terminal device to disable the AI function, to improve management and control of the network side on the network performance, and reduce impact of enabling the AI function on the terminal device side on the network performance.

Based on the embodiments shown in FIG. 4 and FIG. 5, when the network device is in a split architecture, for example, the network device includes the CU and the DU. In a possible implementation, the DU sends the configuration information of the AI function to the CU, and the CU receives the configuration information of the AI function from the DU. The configuration information may be from the core network device, the network device, or the OAM. The CU sends the configuration information of the AI function to the terminal device. The terminal device receives the configuration information of the AI function from the CU. The terminal device determines, based on the configuration information, whether to enable the AI function. In another implementation, when the CU of the network device is divided into the CU-CP and the CU-UP, and the CU-CP of the network device is further divided into the CU-CP 1 and the CU-CP 2, the CU-CP 2 receives the configuration information sent by the core network device, and generates air interface RRC signaling including the configuration information. There is another possibility. To be specific, the network device may independently determine the configuration information for the terminal device, the CU-CP 1 determines the configuration information based on, for example, performance and a capability of the terminal device, and the CU-CP 2 determines air interface RRC signaling, and sends the configuration information to the terminal device by using the RRC signaling. For receiving the configuration information and an operation performed after the terminal device receives the configuration information, refer to steps S401 and S402 in the embodiment in FIG. 4 and steps S502 to S506 in the embodiment in FIG. 5. Details are not described again.

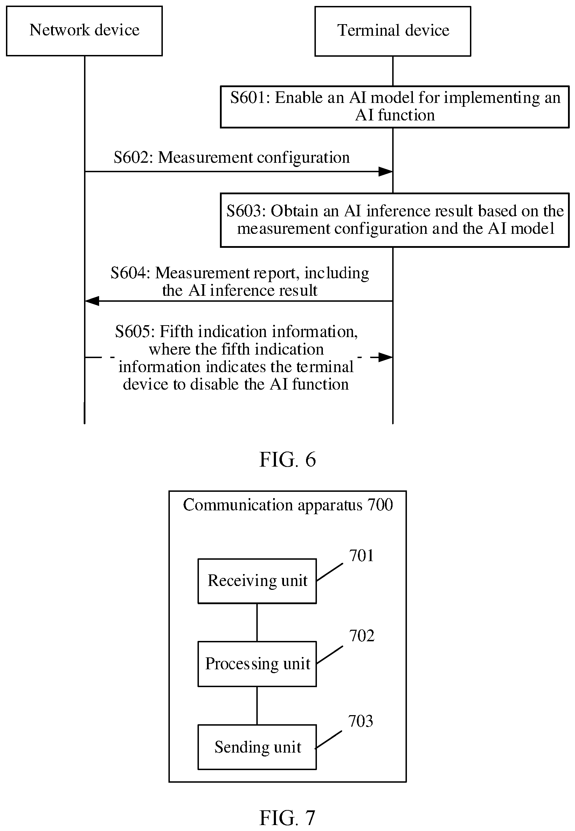

With reference to the network architectures described in FIG. 1 to FIG. 3, the following describes still another communication method provided in an embodiment of this application. FIG. 6 is an interaction diagram of still another communication method according to an embodiment of this application. As shown in FIG. 6, the communication method may include S601 to S605. S605 is an optional step.

It should be noted that a difference between the embodiment shown in FIG. 6 and the embodiment shown in FIG. 4 or FIG. 5 lies in that a terminal device may enable, without depending on configuration information from a network device, an AI model for implementing an AI function (for details, refer to steps S501 to S503), so that the terminal device may independently enable the AI model for implementing the AI function.

S601: The terminal device enables the AI model for implementing the AI function.

S602: The network device sends a measurement configuration to the terminal device. Correspondingly, the terminal device receives the measurement configuration from the network device.

S603: The terminal device obtains an AI inference result based on the measurement configuration and the AI model.

S604: The terminal device sends a measurement report to the network device, where the measurement report includes the AI inference result.

S605: The network device sends fifth indication information to the terminal device, where the fifth indication information indicates the terminal device to disable the AI function. Correspondingly, the terminal device receives the fifth indication information from the network device.

For specific descriptions of steps S601 to S605, refer to steps S504 to S508. Details are not described again.

The foregoing describes method embodiments provided in embodiments of this application, and the following describes apparatus embodiments in embodiments of this application.

FIG. 7 is a diagram of a structure of a communication apparatus according to an embodiment of this application. The communication apparatus may be a terminal device, or may be an apparatus (for example, a chip, a chip system, or a circuit) in the terminal device. As shown in FIG. 7, the communication apparatus 700 includes at least a receiving unit 701, a processing unit 702, and a sending unit 703.

The receiving unit 701 is configured to receive configuration information of an AI function from a network device.

The processing unit 702 is configured to: determine, based on the configuration information, whether to enable the AI function.

In an implementation, the AI function includes at least one type of AI function, and different types of AI functions correspond to different degrees of collaboration between the network device and the terminal device.

In an implementation, the configuration information includes first indication information, and the first indication information indicates whether the terminal device enables the AI function. The processing unit 702 determines, based on the configuration information, whether to enable the AI function, and is specifically configured to: determine, based on the first indication information, whether to enable the AI function.

In an implementation, the configuration information includes a first condition threshold. The processing unit 702 determines, based on the configuration information, whether to enable the AI function, and is specifically configured to: when an AI inference result of the terminal device meets the first condition threshold, determine to enable the AI function.

In an implementation, the first condition threshold includes either an AI inference result confidence threshold or a deviation threshold between the AI inference result and actual measurement information.

In an implementation, the configuration information includes area information, and the area information indicates an area in which the terminal device is allowed to enable the AI function. The processing unit 702 determines, based on the configuration information, whether to enable the AI function, and is specifically configured to enable the AI function in the area indicated by the area information.

In an implementation, the configuration information further includes area information, and the area information indicates an area in which the terminal device is allowed to enable the AI function. The processing unit 702 determines, based on the configuration information, whether to enable the AI function, and is specifically configured to: when the first indication information indicates the terminal device to enable the AI function, determine to enable the AI function in the area indicated by the area information.

In an implementation, when it is determined, based on the configuration information, to enable the AI function, the processing unit 702 is further configured to enable an AI model for implementing the AI function.

The receiving unit 701 is further configured to receive a measurement configuration from the network device.

The processing unit 702 is further configured to obtain the AI inference result based on the measurement configuration and the AI model.

The communication apparatus further includes:
the sending unit 703, configured to send a measurement report to the network device, where the measurement report includes the AI inference result.

In an implementation, the measurement report further includes at least one of second indication information, third indication information, and fourth indication information, where the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

In an implementation, the measurement report further includes one or more of indication information for suggesting whether to disable the AI function and KPI feedback information.

In an implementation, the receiving unit 701 is further configured to receive fifth indication information from the network device, where the fifth indication information indicates the terminal device to disable the AI function.

The processing unit 702 is further configured to disable the AI function based on the fifth indication information.

For more detailed descriptions of the receiving unit 701, the processing unit 702, and the sending unit 703, refer directly to related descriptions of the terminal device in the method embodiments shown in FIG. 4 to FIG. 6. Details are not described herein again.

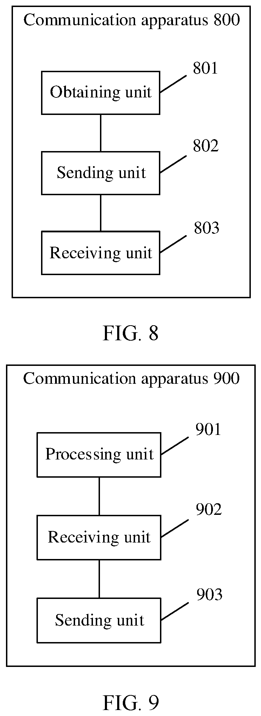

FIG. 8 is a diagram of a structure of another communication apparatus according to an embodiment of this application. The communication apparatus may be a network device, or may be an apparatus (for example, a chip, a chip system, or a circuit) in the network device. As shown in FIG. 8, the communication apparatus 800 includes at least an obtaining unit 801, a sending unit 802, and a receiving unit 803.

The obtaining unit 801 is configured to: obtain AI capability information of a terminal device, and determine that the terminal device supports an AI function.

The sending unit 802 is configured to send configuration information of the AI function to the terminal device, where the configuration information indicates whether the terminal device enables the AI function.

In an implementation, the AI function includes at least one type of AI function, and different types of AI functions correspond to different degrees of collaboration between the network device and the terminal device.

In an implementation, the configuration information includes first indication information, and the first indication information indicates whether the terminal device enables the AI function.

In an implementation, the configuration information includes a first condition threshold.

In an implementation, the first condition threshold includes either an AI inference result confidence threshold or a deviation threshold between an AI inference result and actual measurement information.

In an implementation, the configuration information includes area information, and the area information indicates an area in which the terminal device is allowed to enable the AI function.

In an implementation, when the configuration information indicates the terminal device to enable the AI function, the sending unit 802 is further configured to send a measurement configuration to the terminal device.

The communication apparatus further includes:
the receiving unit 803, configured to receive a measurement report from the terminal device, where the measurement report includes the AI inference result, and the AI inference result is obtained based on the measurement configuration and an AI model for implementing the AI function.

In an implementation, the measurement report further includes at least one of second indication information, third indication information, and fourth indication information, where the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

In an implementation, the measurement report further includes one or more of indication information for suggesting whether to disable the AI function and KPI feedback information.

In an implementation, the sending unit 802 is further configured to send fifth indication information to the terminal device, where the fifth indication information indicates the terminal device to disable the AI function.

For more detailed descriptions of the obtaining unit 801, the sending unit 802, and the receiving unit 803, refer directly to related descriptions of the network device in the method embodiments shown in FIG. 4 to FIG. 6. Details are not described herein again.

FIG. 9 is a diagram of a structure of still another communication apparatus according to an embodiment of this application. The communication apparatus may be a terminal device, or may be an apparatus (for example, a chip, a chip system, or a circuit) in the terminal device. As shown in FIG. 9, the communication apparatus 900 includes at least a processing unit 901, a receiving unit 902, and a sending unit 903.

The processing unit is configured to enable an AI model for implementing an AI function.

The receiving unit is configured to receive a measurement configuration from a network device.

The processing unit is further configured to obtain an AI inference result based on the measurement configuration and the AI model.

The sending unit is configured to send a measurement report to the network device, where the measurement report includes the AI inference result.

In an implementation, the measurement report further includes at least one of second indication information, third indication information, and fourth indication information, where the second indication information indicates that the AI inference result is a result obtained through inference based on the AI model, the third indication information indicates whether the AI inference result is consistent with actual measurement information, and the fourth indication information indicates deployment node information and collaboration level information of the AI model.

In an implementation, the measurement report further includes one or more of indication information for suggesting whether to disable the AI function and KPI feedback information.

In an implementation, the receiving unit 902 is further configured to receive fifth indication information from the network device, where the fifth indication information indicates the terminal device to disable the AI function.

The processing unit 901 is further configured to disable the AI function based on the fifth indication information.

For more detailed descriptions of the processing unit 901, the receiving unit 902, and the sending unit 903, refer directly to related descriptions of the terminal device in the method embodiments shown in FIG. 4 to FIG. 6. Details are not described herein again.

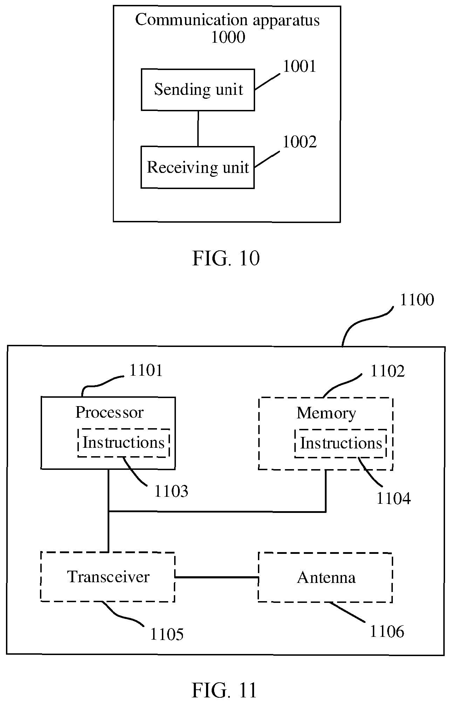

FIG. 10 is a diagram of a structure of still another communication apparatus according to an embodiment of this application. The communication apparatus may be a network device, or may be an apparatus (for example, a chip, a chip system, or a circuit) in the network device. As shown in FIG. 10, the communication apparatus 1000 includes at least a sending unit 1001 and a receiving unit 1002.

The sending unit 1001 is configured to send a measurement configuration to a terminal device.

The receiving unit 1002 is configured to receive a measurement report from the terminal device, where the measurement report includes an AI inference result, and the AI inference result is obtained based on the measurement configuration and an AI model for implementing an AI function.

In an implementation, the measurement report further includes at least one of second indication information, third indication information, and fourth indication information, where the second indication information indicates that the AI inference result is a result obtained through inference based on the AI model, the third indication information indicates whether the AI inference result is consistent with actual measurement information, and the fourth indication information indicates deployment node information and collaboration level information of the AI model.

In an implementation, the measurement report further includes one or more of indication information for suggesting whether to disable the AI function and KPI feedback information.

In an implementation, the sending unit 1001 is further configured to send fifth indication information to the terminal device, where the fifth indication information indicates the terminal device to disable the AI function.

For more detailed descriptions of the sending unit 1001 and the receiving unit 1002, refer directly to related descriptions of the terminal device in the method embodiments shown in FIG. 4 to FIG. 6. Details are not described herein again.

Based on the foregoing network architecture, FIG. 11 is a diagram of a structure of still another communication apparatus according to an embodiment of this application. As shown in FIG. 11, the apparatus 1100 may include one or more processors 1101, and the processor 1101 may also be referred to as a processing unit, and may implement a specific control function. The processor 1101 may be a general-purpose processor, a dedicated processor, or the like. For example, the processor 1101 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1101 may alternatively store instructions 1103 and/or data, and the instructions 1103 and/or the data may be run by the processor, to enable the apparatus 1100 to perform the methods described in the foregoing method embodiments.

In another optional design, the processor 1101 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1100 may include a circuit, and the circuit may implement the sending, receiving, or communication function in the foregoing method embodiments.

Optionally, the apparatus 1100 may include one or more memories 1102. The memory 1102 may store instructions 1104 and/or data, and the instructions 1104 and/or the data may be run on the processor, to enable the apparatus 1100 to perform the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1100 may further include a transceiver 1105 and/or an antenna 1106. The processor 1101 may be referred to as a processing unit, and control the apparatus 1100. The transceiver 1105 may be referred to as a transceiver unit, a transceiver machine, a transceiver circuit, a transceiver apparatus, a transceiver module, or the like, and is configured to implement the receiving and sending functions.

Optionally, the apparatus 1100 in this embodiment of this application may be configured to perform the methods described in FIG. 4 to FIG. 6 in embodiments of this application.

In an implementation, the communication apparatus 1100 may be a terminal device, or may be an apparatus (for example, a chip, a chip system, or a circuit) in the terminal device. When the computer program instructions stored in the memory 1102 are executed, the processor 1101 is configured to: perform the operations performed by the processing unit 702 in the foregoing embodiment, or perform the operations performed by the processing unit 901 in the foregoing embodiment, the transceiver 1105 is configured to: perform the operations performed by the receiving unit 701 and the sending unit 703 in the foregoing embodiment, or perform the operations performed by the receiving unit 902 and the sending unit 903 in the foregoing embodiment, and the transceiver 1105 is further configured to send information to a communication apparatus other than the communication apparatus. The terminal device or the apparatus in the terminal device may be further configured to perform various methods performed by the terminal device in the method embodiments in FIG. 4 to FIG. 6. Details are not described again.

In an implementation, the communication apparatus 1100 may be a network device, or may be an apparatus (for example, a chip, a chip system, or a circuit) in the network device. When the computer program instructions stored in the memory 1102 are executed, the processor 1101 is configured to perform the operations performed by the obtaining unit 801 in the foregoing embodiment, the transceiver 1105 is configured to: perform the operations performed by the sending unit 802 and the receiving unit 803 in the foregoing embodiment, or perform the operations performed by the sending unit 1001 and the receiving unit 1002 in the foregoing embodiment, and the transceiver 1105 is further configured to receive information from a communication apparatus other than the communication apparatus. The network device or the apparatus in the network device may be further configured to perform various methods performed by the network device in the method embodiments in FIG. 4 to FIG. 6. Details are not described again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first communication device or a second communication device. However, a range of the apparatus described in this application is not limited thereto, and a structure of the apparatus may not be limited to FIG. 11. The apparatus may be an independent device, or may be a part of a large device. For example, the apparatus may be:
(1) an independent integrated circuit IC, a chip, or a chip system or subsystem;
(2) a set of one or more ICs, where optionally, the IC set may further include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

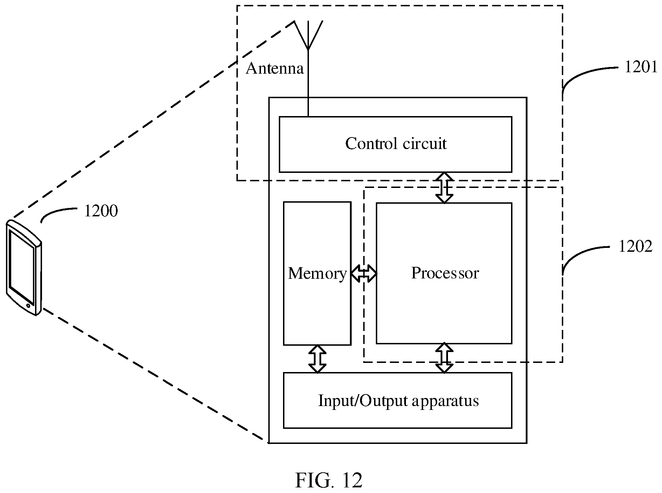

FIG. 12 is a diagram of a structure of a terminal device according to an embodiment of this application. For ease of description, FIG. 12 shows only main components of the terminal device. As shown in FIG. 12, the terminal device 1200 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user.

After the terminal is powered on, the processor may read a software program in a storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of an electromagnetic wave through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 12 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data, and the central processing unit is mainly configured to: control the entire terminal, execute the software program, and process the data of the software program. The processor in FIG. 12 integrates functions of the baseband processor and the central processing unit. A person skilled in the art may understand that the baseband processor and the central processing unit each may be an independent processor, and are interconnected by using a technology such as a bus. A person skilled in the art may understand that the terminal may include a plurality of baseband processors to adapt to different network standards, and the terminal may include a plurality of central processing units to enhance a processing capability of the terminal. Components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

In an example, the antenna and the control circuit that have a transceiver function may be considered as a transceiver unit 1201 of the terminal device 1200, and the processor that has a processing function may be considered as a processing unit 1202 of the terminal device 1200. As shown in FIG. 12, the terminal device 1200 includes the transceiver unit 1201 and the processing unit 1202. The transceiver unit may also be referred to as a transceiver, a transceiver machine, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. That is, the transceiver unit 1201 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like. Optionally, the receiving unit and the sending unit may be one integrated unit, or may be a plurality of independent units. The receiving unit and the sending unit may be in one geographical position, or may be distributed in a plurality of geographical positions.

In an implementation, the processing unit 1202 is configured to: perform the operations performed by the processing unit 702 in the foregoing embodiment, or perform the operations performed by the processing unit 901 in the foregoing embodiment, and the transceiver unit 1201 is configured to: perform the operations performed by the receiving unit 701 and the sending unit 703 in the foregoing embodiment, or perform the operations performed by the receiving unit 902 and the sending unit 903 in the foregoing embodiment. The terminal device 1200 may be further configured to perform various methods performed by the terminal device in the method embodiments in FIG. 4 to FIG. 6. Details are not described again.

An embodiment of this application further provides a computer-readable storage medium, and the computer-readable storage medium stores a computer program. When the program is executed by a processor, a procedure related to the terminal device in the transmission mode determining method provided in the foregoing method embodiments may be implemented.

An embodiment of this application further provides a computer-readable storage medium, and the computer-readable storage medium stores a computer program. When the program is executed by a processor, a procedure related to the network device in the transmission mode determining method provided in the foregoing method embodiments may be implemented.

An embodiment of this application further provides a computer program product. When the computer program product runs on a computer or a processor, the computer or the processor is enabled to perform one or more steps in any one of the foregoing transmission mode determining methods. When each of component modules of the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 4 to FIG. 6. The chip system may include a chip, or may include a chip and another discrete component.

An embodiment of this application further discloses a communication system, and the system includes a terminal device and a network device. For specific descriptions, refer to the transmission mode determining methods shown in FIG. 4 to FIG. 6.

It should be understood that the memory mentioned in embodiments of this application may be a volatile memory or a non-volatile memory, or may include both the volatile memory and the non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for specific working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk drive, a ROM, a RAM, a magnetic disk, or an optical disc.

A sequence of the steps of the methods in embodiments of this application may be adjusted, combined, and deleted based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made; and these modifications or replacements do not make the essence of the corresponding technical solutions depart from the scope of the technical solutions in embodiments of this application.

## Claims

1. A communication method, wherein the method is applied to a terminal device, and the method comprises:
receiving configuration information of an artificial intelligence AI function from a network device; and
determining, based on the configuration information, whether to enable the AI function.

2. The method according to claim 1, wherein the AI function comprises at least one type of AI function, and different types of AI functions correspond to different degrees of collaboration between the network device and the terminal device.

3. The method according to claim 1 or 2, wherein the configuration information comprises first indication information, and the first indication information indicates whether the terminal device enables the AI function; and
the determining, based on the configuration information, whether to enable the AI function comprises:
determining, based on the first indication information, whether to enable the AI function.

4. The method according to claim 1 or 2, wherein the configuration information comprises a first condition threshold; and
the determining, based on the configuration information, whether to enable the AI function comprises:
when an AI inference result of the terminal device meets the first condition threshold, determining to enable the AI function.

5. The method according to claim 4, wherein the first condition threshold comprises either an AI inference result confidence threshold or a deviation threshold between the AI inference result and actual measurement information.

6. The method according to claim 1 or 2, wherein the configuration information comprises area information, and the area information indicates an area in which the terminal device is allowed to enable the AI function; and
the determining, based on the configuration information, whether to enable the AI function comprises:
enabling the AI function in the area indicated by the area information.

7. The method according to claim 3, wherein the configuration information further comprises area information, and the area information indicates an area in which the terminal device is allowed to enable the AI function; and
the determining, based on the configuration information, whether to enable the AI function comprises:
when the first indication information indicates the terminal device to enable the AI function, determining to enable the AI function in the area indicated by the area information.

8. The method according to any one of claims 1 to 7, wherein when it is determined, based on the configuration information, to enable the AI function, the method further comprises:
enabling an AI model for implementing the AI function;
receiving a measurement configuration from the network device;
obtaining the AI inference result based on the measurement configuration and the AI model; and
sending a measurement report to the network device, wherein the measurement report comprises the AI inference result.

9. The method according to claim 8, wherein the measurement report further comprises at least one of second indication information, third indication information, and fourth indication information, wherein the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

10. The method according to claim 9, wherein the measurement report further comprises one or more of indication information for suggesting whether to disable the AI function and key performance indicator KPI feedback information.

11. The method according to any one of claims 8 to 10, wherein the method further comprises:
receiving fifth indication information from the network device, wherein the fifth indication information indicates the terminal device to disable the AI function; and
disabling the AI function based on the fifth indication information.

12. A communication method, wherein the method is applied to a network device, and the method comprises:
obtaining artificial intelligence AI capability information of a terminal device, and determining that the terminal device supports an AI function; and
sending configuration information of the AI function to the terminal device, wherein the configuration information indicates whether the terminal device enables the AI function.

13. The method according to claim 12, wherein the AI function comprises at least one type of AI function, and different types of AI functions correspond to different degrees of collaboration between the network device and the terminal device.

14. The method according to claim 12 or 13, wherein the configuration information comprises first indication information, and the first indication information indicates whether the terminal device enables the AI function.

15. The method according to claim 12 or 13, wherein the configuration information comprises a first condition threshold.

16. The method according to claim 15, wherein the first condition threshold comprises either an AI inference result confidence threshold or a deviation threshold between an AI inference result and actual measurement information.

17. The method according to any one of claims 12 to 14, wherein the configuration information comprises area information, and the area information indicates an area in which the terminal device is allowed to enable the AI function.

18. The method according to any one of claims 12 to 17, wherein when the configuration information indicates the terminal device to enable the AI function, the method further comprises:
sending a measurement configuration to the terminal device; and
receiving a measurement report from the terminal device, wherein the measurement report comprises the AI inference result, and the AI inference result is obtained based on the measurement configuration and an AI model for implementing the AI function.

19. The method according to claim 18, wherein the measurement report further comprises at least one of second indication information, third indication information, and fourth indication information, wherein the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

20. The method according to claim 19, wherein the measurement report further comprises one or more of indication information for suggesting whether to disable the AI function and key performance indicator KPI feedback information.

21. The method according to any one of claims 18 to 20, wherein the method further comprises:
sending fifth indication information to the terminal device, wherein the fifth indication information indicates the terminal device to disable the AI function.

22. A communication apparatus, comprising:
a receiving unit, configured to receive configuration information of an artificial intelligence AI function from a network device; and
a processing unit, configured to: determine, based on the configuration information, whether to enable the AI function.

23. The apparatus according to claim 22, wherein the AI function comprises at least one type of AI function, and different types of AI functions correspond to different degrees of collaboration between the network device and a terminal device.

24. The apparatus according to claim 22 or 23, wherein the configuration information comprises first indication information, and the first indication information indicates whether the terminal device enables the AI function; and
the processing unit is specifically configured to: determine, based on the first indication information, whether to enable the AI function.

25. The apparatus according to claim 22 or 23, wherein the configuration information comprises a first condition threshold; and
the processing unit is specifically configured to: when an AI inference result of the terminal device meets the first condition threshold, determine to enable the AI function.

26. The apparatus according to claim 25, wherein the first condition threshold comprises either an AI inference result confidence threshold or a deviation threshold between the AI inference result and actual measurement information.

27. The apparatus according to claim 22 or 23, wherein the configuration information comprises area information, and the area information indicates an area in which the terminal device is allowed to enable the AI function; and
the processing unit is specifically configured to enable the AI function in the area indicated by the area information.

28. The apparatus according to claim 24, wherein the configuration information further comprises area information, and the area information indicates an area in which the terminal device is allowed to enable the AI function; and
the processing unit is specifically configured to: when the first indication information indicates the terminal device to enable the AI function, determine to enable the AI function in the area indicated by the area information.

29. The apparatus according to any one of claims 22 to 28, wherein when it is determined, based on the configuration information, to enable the AI function, the processing unit is further configured to enable an AI model for implementing the AI function;
the receiving unit is further configured to receive a measurement configuration from the network device;
the processing unit is further configured to obtain the AI inference result based on the measurement configuration and the AI model; and
the apparatus further comprises a sending unit, configured to send a measurement report to the network device, wherein the measurement report comprises the AI inference result.

30. The apparatus according to claim 29, wherein the measurement report further comprises at least one of second indication information, third indication information, and fourth indication information, wherein the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

31. The apparatus according to claim 30, wherein the measurement report further comprises one or more of indication information for suggesting whether to disable the AI function and key performance indicator KPI feedback information.

32. The apparatus according to any one of claims 29 to 31, wherein the receiving unit is further configured to receive fifth indication information from the network device, wherein the fifth indication information indicates the terminal device to disable the AI function; and
the processing unit is further configured to disable the AI function based on the fifth indication information.

33. A communication apparatus, comprising:
an obtaining unit, configured to: obtain artificial intelligence AI capability information of a terminal device, and determine that the terminal device supports an AI function; and
a sending unit, configured to send configuration information of the AI function to the terminal device, wherein the configuration information indicates whether the terminal device enables the AI function.

34. The apparatus according to claim 33, wherein the AI function comprises at least one type of AI function, and different types of AI functions correspond to different degrees of collaboration between a network device and the terminal device.

35. The apparatus according to claim 33 or 34, wherein the configuration information comprises first indication information, and the first indication information indicates whether the terminal device enables the AI function.

36. The apparatus according to claim 33 or 34, wherein the configuration information comprises a first condition threshold.

37. The apparatus according to claim 36, wherein the first condition threshold comprises either an AI inference result confidence threshold or a deviation threshold between an AI inference result and actual measurement information.

38. The apparatus according to any one of claims 33 to 35, wherein the configuration information comprises area information, and the area information indicates an area in which the terminal device is allowed to enable the AI function.

39. The apparatus according to any one of claims 33 to 38, wherein when the configuration information indicates the terminal device to enable the AI function, the sending unit is further configured to send a measurement configuration to the terminal device; and
the receiving unit is further configured to receive a measurement report from the terminal device, wherein the measurement report comprises the AI inference result, and the AI inference result is obtained based on the measurement configuration and an AI model for implementing the AI function.

40. The apparatus according to claim 39, wherein the measurement report further comprises at least one of second indication information, third indication information, and fourth indication information, wherein the second indication information indicates that the AI inference result is a result obtained through inference based on the AI model, the third indication information indicates whether the AI inference result is consistent with the actual measurement information, and the fourth indication information indicates deployment node information and collaboration level information of the AI model.

41. The apparatus according to claim 40, wherein the measurement report further comprises one or more of indication information for suggesting whether to disable the AI function and key performance indicator KPI feedback information.

42. The apparatus according to any one of claims 39 to 41, wherein the sending unit is further configured to send fifth indication information to the terminal device, wherein the fifth indication information indicates the terminal device to disable the AI function.

43. A communication apparatus, comprising a processor, a memory, an input interface, and an output interface, wherein the input interface is configured to receive information from a communication apparatus other than the communication apparatus, the output interface is configured to output information to a communication apparatus other than the communication apparatus, and when a stored computer program stored in the memory is invoked by the processor, the method according to any one of claims 1 to 11 is implemented, or the method according to any one of claims 12 to 21 is implemented.

44. A computer-readable storage medium, wherein the computer-readable storage medium stores a computer program or computer instructions, and when the computer program or the computer instructions are executed by a processor, the method according to any one of claims 1 to 11 is implemented, or the method according to any one of claims 12 to 21 is implemented.

45. A computer program product, wherein the computer program product comprises instructions, and when the instructions are run by a processor, the method according to any one of claims 1 to 11 is implemented, or the method according to any one of claims 12 to 21 is implemented.

46. A chip system, comprising at least one processor, a memory, and an interface circuit, wherein the memory, the interface circuit, and the at least one processor are interconnected through a line, the at least one memory stores instructions, and when the instructions are executed by the processor, the method according to any one of claims 1 to 11 is implemented, or the method according to any one of claims 12 to 21 is implemented.

47. A communication system, comprising the communication apparatus according to any one of claims 22 to 32 and the communication apparatus according to any one of claims 33 to 42.
